# EUROPÄISCHE PATENTANMELDUNG

(11) **EP 3 783 330 A1**
(43) Veröffentlichungstag der Anmeldung: **24.02.2021**
(21) Anmeldenummer: 20191814.1
(22) Anmeldetag: 19.08.2020
(51) Int. Cl.: G01M 13/045

(54) **VORRICHTUNG UND VERFAHREN ZUR ÜBERWACHUNG WENIGSTENS EINES GLEITLAGERS**

(30) Priorität: 22.08.2019 DE 102019122642
(71) Anmelder: Dickow Pumpen GmbH & Co. KG, 84478 Waldkraiburg (DE)
(72) Erfinder: Russ, Andreas, 84478 Waldkraiburg (DE); Fischer, Florian, 84494 Lohkirchen (DE)
(74) Vertreter: Fischer & Konnerth

(57) **Zusammenfassung**

Verfahren zur Überwachung wenigstens eines ersten Gleitlagers im Betrieb, mit folgenden Schritten: - Definieren und Zuordnen einer ersten Soll-Schwingfrequenz für das zu überwachende Lager, welche von dem ersten zu überwachenden Lager im laufenden Betrieb mechanisch oder hydraulisch erzwungen und drehzahlabhängig erzeugt wird, - Aufnehmen einer ersten Ist-Schwingfrequenz im laufenden Betrieb des ersten Gleitlagers mit einer Messvorrichtung, - Vergleichen der ersten Ist-Schwingfrequenz mit der ersten Soll-Schwingfrequenz.

## Beschreibung

Die vorliegende Erfindung betrifft eine Vorrichtung und ein Verfahren zur Überwachung wenigstens eines Gleitlagers.

Aus dem Stand der Technik bekannte schwingungstechnische Methoden zur Lagerüberwachung basieren auf dem Prinzip der Erkennung eines Schadens oder sich anbahnenden Schadens an seinen typischen schwingungstechnischen oder akustischen Signalsignaturen. Dafür müssen die Schadensfrequenzen und zulässigen Signalintensitäten bekannt sein, um zuverlässige Aussagen treffen zu können. Diese Methode ist sehr gut bei Kugellagern umsetzbar, da deren bewegte mechanische Bauteile bei Überlauf eines etwaigen Schadens drehzahlabhängig spezifische Frequenzen anregen. Aus der Signalstärke kann auch auf das Ausmaß des Schadens geschlossen werden.

Bei Gleitlagern ist es dagegen schwierig, eine eindeutige, verwechslungsfreie Schadensfrequenz zu definieren. Da z. B. beim Bruch eines Lagers oder bei einem Oberflächenverschleiß kein reproduzierbarer Schwingungsverlauf vorhersagbar ist, kann auch im Gesamtschwingungsspektrum einer Maschine ein defektes Gleitlager nicht oder nur mit Schwierigkeiten identifiziert werden. Meist geben Erfahrungswerte oder empirisch ermittelte Werte einen einzigen aber auch nicht eindeutig sicheren Anhaltspunkt. Diese Vorgehensweise ist außerdem aufwändig und erfordert umfangreiches Wissen im Bereich der Schwingungstechnik, der mechanischen Komponenten sowie der hydraulischen Abläufe im Lagerspalt.

Erschwerend kommt der Umstand hinzu, dass eine solche Vorgehensweise letztendlich keine klaren allgemeingültigen Aussagen liefert und sich damit nur sehr begrenzt auf andere Gleitlager bzw. Konstruktionen übertragen lässt.

Ein aus der DE 40 28 559 A1 bekanntes Verfahren beruht auf der Messung eines frequenzselektiv aufbereiteten Lagersignals bei verschiedenen Betriebseinflüssen, z. B. Anstreiferscheinungen, und der Bewertung dieses Signales mittels einer mathematisch ermittelten Diagnosekennzahl. Dabei werden die Frequenzbilder bei verschiedenen Störungen gesucht. Dieses Verfahren benötigt im Allgemeinen eine Referenzmessung unter den Bedingungen, die erkannt werden sollen. Die Signalstärke wird im Wesentlichen von der Drehzahl, der Größe der Kontaktstelle, Position der Messstelle, den Eigenschaften des Schmierstoffes und letztendlich der Intensität des Kontaktes bestimmt und ist erfahrungsgemäß in Gleitlagern sehr schwach ausgebildet.

Sehr nachteilig ist bei diesem Verfahren die Tatsache, dass die gesuchten und zu bewertenden Frequenzen in diesem Verfahren der Drehfrequenz und deren Vielfachen entspricht. Die Messung, selbst direkt an der Lagerschale, ist in der Praxis nicht isoliert von der restlichen Maschine und wird durch natürliche Frequenzen in der restlichen Maschine überlagert. Restunwucht, Kupplungsfehlausrichtung, symmetrische Passierfrequenzen der 1., 2., 3. Ordnung, lose oder lockere Verbindungselemente und vieles mehr sind in Ihrer Signalstärke üblicherweise höher und in der Frequenz gleich. Dadurch ist es nahezu unmöglich, die Lagerfrequenz (ohne zusätzliche Maßnahmen) zu unterscheiden bzw. isolieren und ihrer Signalstärke verwechslungsfrei zuzuordnen. Sind bei dem aus der DE 40 28 559 A1 bekannten Verfahren nicht alle Schadfrequenzen und deren Struktur bekannt, erkennt das System möglicherweise nicht alle schädlichen Betriebszustände. Aufwändig: Um diese Frequenzbilder zu erhalten sind im allgemeinen Referenzmessungen unter diesen Betriebszuständen nötig.

Insbesondere bei Gleitlagern mit keramischen Lagerwerkstoffen ist ein plötzlicher Bruch der rotierenden Teile bei Überlastung (z.B. wegen zerbrochener und ausgespülter Keramik oder infolge von Montagefehlern) ein häufiger Ausfallgrund und führt zu nicht näher definierbaren chaotischen Signalbildern.

Der Erfindung liegt eine Aufgabe zugrunde, eine Vorrichtung und ein Verfahren zur Überwachung wenigstens eines Gleitlagers vorzuschlagen, bei welchen die aus dem Stand der Technik bekannten Nachteile vermieden oder wenigstens stark vermindert werden.

Die Aufgabe wird zunächst gelöst mit einem Verfahren gemäß Anspruch 1, nämlich einem Verfahren zur Überwachung wenigstens eines ersten Gleitlagers im Betrieb, mit folgenden Schritten:
a1) Definieren und Zuordnen einer ersten Soll-Schwingfrequenz für das zu überwachende Lager, welche von dem ersten zu überwachenden Lager im laufenden Betrieb mechanisch oder hydraulisch erzwungen und drehzahlabhängig erzeugt wird,
b1) Aufnehmen einer ersten Ist-Schwingfrequenz im laufenden Betrieb des ersten Gleitlagers mit einer Messvorrichtung,
c1) Vergleichen der ersten Ist-Schwingfrequenz mit der ersten Soll-Schwingfrequenz.

Das erfindungsgemäße Verfahren hat den großen Vorteil, dass im laufenden Betrieb eine Ist-Schwingfrequenz überwacht wird, welche sofern sie nicht mit der ersten eindeutig bekannten Soll-Schwingfrequenz übereinstimmt, sofort und eindeutig ein Indiz für einen Lagerschaden ergibt, welchem ein schnelles Stillsetzen des ersten Gleitlagerns folgen kann, um größeren Maschinenschaden zu vermeiden. Der Aufwand, mit der ersten Soll-Schwingfrequenz eine sog. "Gut-Frequenz" zu überwachen ist wesentlich geringer als aus im Betrieb neu entstehenden nicht zuordenbaren Frequenzen auf einen Lagerzustand zu schließen. Die vom zu überwachenden Gleitlager erzeugte Ist-Frequenz zeigt im laufenden Betrieb, ob Gleitlager und Schmierfilm in "gutem" Zustand sind. Gleichzeitig kann ein eventueller Oberflächenverschleiß durch die Abnahme der Signalstärke der Soll-Schwingfrequenz erkannt werden. Gleiches gilt für Mangelschmierung oder Trockenlauf im Lagerspalt. Ist das Signal der Soll-Schwingfrequenz nicht mehr nachweisbar bzw. messbar, kann von einer Zerstörung oder starkem Oberflächenverschleiß ausgegangen werden.

In einer vorteilhaften Ausbildung des erfindungsgemäßen Verfahrens ist dieses dadurch gekennzeichnet, dass es zur Überwachung wenigstens eines zweiten Gleitlagers im Betrieb folgende Schritte aufweist,
a2) Definieren und Zuordnen einer zweiten von der ersten verschiedenen Soll-Schwingfrequenz für wenigstens das zweite zu überwachende Gleitlager, welche von dem zweiten zu überwachenden Lager im laufenden Betrieb mechanisch oder hydraulisch erzwungen und drehzahlabhängig erzeugt wird,
b2) Aufnehmen einer zweiten Ist-Schwingfrequenz im laufenden Betrieb des zweiten Gleitlagers mit einer Messvorrichtung,
c2) Vergleichen der zweiten Ist-Schwingfrequenz mit der zweiten Soll-Schwingfrequenz.

Ein besonderer Vorteil dieser Ausbildung des erfindungsgemäßen Verfahrens ist die mögliche Zuordnung verschiedener Soll-Frequenzen für Maschinensysteme, die mehrere Gleitlager aufweisen. Dadurch ist es möglich, in diesem Fall gleichzeitig beide Gleitlager über deren verschiedene Soll-Frequenzen im laufenden Betrieb zu überwachen und ein schadhaftes Lager eines bestimmten Gleitlagers aufgrund der Differenz seiner im laufenden Betrieb aufgenommenen bzw. gemessenen Ist-Schwingfrequenz gegenüber seiner ihm zugeordneten Soll-Schwingfrequenz genau zu identifizieren.

In einer weiteren vorteilhaften Ausbildung des erfindungsgemäßen Verfahrens ist dieses dadurch gekennzeichnet, dass als Soll-Schwingfrequenzen solche Frequenzen ausgewählt, definiert und zugeordnet werden, die nicht mit in dem betroffenen Maschinensystem außerhalb der Gleitlager aufgrund seiner Konstruktion auftretenden Frequenzen verwechselt werden können. Der Vorteil liegt auf der Hand: Unwuchten, Fehlausrichtungen, Schaufelpassier- oder Überrollfrequenzen und deren Vielfache können vermieden und damit nahezu jegliche Fehlinterpretationen ausgeschlossen werden. Hierbei eignen sich für die Erkennbarkeit und Abgrenzung zu anderen Frequenzsignalen auch Primzahlanordnungen gut.

Die Aufgabe wird weiterhin gelöst mit einer Vorrichtung gemäß Anspruch 4, nämlich einer Vorrichtung zur Überwachung wenigstens eines in einem Maschinensystem angeordneten Gleitlagers mit einem feststehenden Element und einem rotierenden Element, insbesondere nach einem Verfahren gemäß einem der oben diskutierten Verfahrensansprüche, die gekennzeichnet ist durch folgende Merkmale:
a) das rotierende Element weist einen Impulsgeber auf,
b) das am Maschinensystem befestigt angeordnete feststehende Element weist einen Impulsempfänger auf,
c) im Bereich des Maschinensystems ist ein Schwingungsmesser-Analysator angeordnet.

Mit der erfindungsgemäßen Vorrichtung kann höchst unkompliziert eine Gut-Frequenzmessung durchgeführt werden. Die Herstellung von Impulsgeber und Impulsempfänger ist ebenfalls kostengünstig und einfach.

Die Aufgabe wird ebenfalls weiterhin gelöst mit einer Vorrichtung gemäß Anspruch 5, nämlich einer Vorrichtung zur Überwachung wenigstens eines in einem Maschinensystem angeordneten Gleitlagers mit einem feststehenden Element und einem rotierenden Element, insbesondere nach einem Verfahren gemäß einem der oben diskutierten Verfahrensansprüche, die gekennzeichnet ist durch folgende Merkmale:
a) das rotierende Element weist einen Impulsempfänger auf,
b) das am Maschinensystem befestigt angeordnete feststehende Element weist einen Impulsgeber auf,
c) im Bereich des Maschinensystems ist ein Schwingungsmesser-Analysator angeordnet.

Hier sind die Komponenten Impulsempfänger und Impulsgeber in der Vorrichtung vertauscht angeordnet. Sie bietet die gleichen Vorteile wie die der zuvor beschriebenen Vorrichtung.

Erfindungsgemäß wird nach der zugeordneten Frequenz gesucht, und durch das schlichte Vorhandensein dieser Frequenz wird die Beurteilung des Zustandes als "GUT" bewertet.

Mit "zugeordneter Frequenz" ist die Modifikation der Lager mit Impulsgebern und Impulsempfängern gemeint, die durch ihre (gewählte, d. h. zugeordnete) Anzahl und der Drehzahl die gesuchte bzw. gewählte Frequenz ergibt.

Zusätzlich könnte man in diesem Zuge auch die Signalstärke bewerten, um z.B.: Verschleiß, Änderung von Umgebungsbedingungen, Trockenlauf usw. zu erfassen. Grundlage hierfür wäre eine Referenzmessung unter den gesuchten Bedingungen, um präzise Aussagen tätigen zu können. Die Signalstärke ist stark abhängig von den jeweiligen Betriebsbedingungen (Druck, Temperatur, Schmierflüssigkeit usw.) und der Ausführung der Impulsgeber- und Impulsempfängeranordnung und variiert von Anwendung zu Anwendung.

In einer vorteilhaften Ausbildung der erfindungsgemäßen Vorrichtung ist diese dadurch gekennzeichnet, dass die Impulsgeber und Impulsempfänger als Nuten, Bohrungen, Vertiefungen, Erhöhungen oder ähnliche Oberflächenveränderungen ausgebildet sind, wobei sich die Anzahl der Impulsgeber und Impulsempfänger unterscheidet, einer der beiden jedoch nur einmal auftritt, also entweder ein Impulsgeber und mehrere Impulsempfänger oder mehrere Impulsgeber und ein Impulsempfänger.

Die Herstellung von Impulsgeber und Impulsempfänger ist vorteilhafterweise sehr einfach und kostengünstig durch fräsen, bohren, schleifen, lasern, sintern, gießen, beschichten und alle anderen geeigneten Materialauftrags- bzw. -abtragstechniken möglich. Damit ist diese erfindungsgemäße Ausbildung der Vorrichtung von Vorteil.

In einer weiteren vorteilhaften Ausbildung der erfindungsgemäßen Vorrichtung ist diese dadurch gekennzeichnet, dass das rotierende Element als Impulsgeber mit dreizehn Nuten und das feststehende Element als Impulsempfänger mit einer (Zahlwort eins) Nut ausgebildet ist.

Um nun eine klare Aussage über den Zustand einzelner Gleitlagerkomponenten zu erlangen, wird hier ein Verfahren zur Zustandsüberwachung an rotierenden Gleitlagern mittels schwingungstechnischer- oder akustischer Frequenzanalyse beschrieben. Bei dieser Methode wird erfindungsgemäß nicht nach typischen Schadensfrequenzen gesucht und diese bewertet, sondern es wird durch geeignete Maßnahmen wie Impulserzeugung der Gleitlagerpaarung eine Schwingfrequenz zugeordnet, die sich im Betrieb mechanisch, hydraulisch erzwungen und drehzahlabhängig ergibt.

Im Folgenden wird die Erfindung um zu zeigen, wie ausgeführt werden kann und zum leichteren Verständnis anhand eines Ausführungsbeispiels einer erfindungsgemäßen Vorrichtung mittels einer Zeichnung und weitere Erklärungen kurz beschrieben.
- Fig. 1: zeigt stark schematisiert und vereinfacht die Darstellung der wesentlichen Elemente eines Maschinensystems, in welchem eine Ausführungsform einer erfindungsgemäßen Vorrichtung angeordnet ist, im Teilschnitt.
- Fig. 1a: zeigt stark schematisiert und vereinfacht ein Maschinensystem gemäß Fig. 1, in welchem jedoch die Impulsgeber und der Impulsempfänger als Bohrungen ausgeführt sind.
- Fig. 2: zeigt stark schematisiert und vereinfacht die Darstellung einer Pumpe, in welcher eine Ausführungsform einer erfindungsgemäßen Vorrichtung mehrfach angeordnet ist, im Teilschnitt.
- Fig. 3: zeigt eine Tabelle mit dem Normal- bzw. Gutzustand im Frequenzspektrum für eine Pumpe gemäß Fig. 2.
- Fig. 4: zeigt eine Tabelle mit Lagerbruch Lager 1 im Frequenzspektrum für eine Pumpe gemäß Fig. 2.
- Fig. 5: zeigt eine Tabelle mit Lagerüberlastung Lager 3 im Frequenzspektrum für eine Pumpe gemäß Fig. 2.

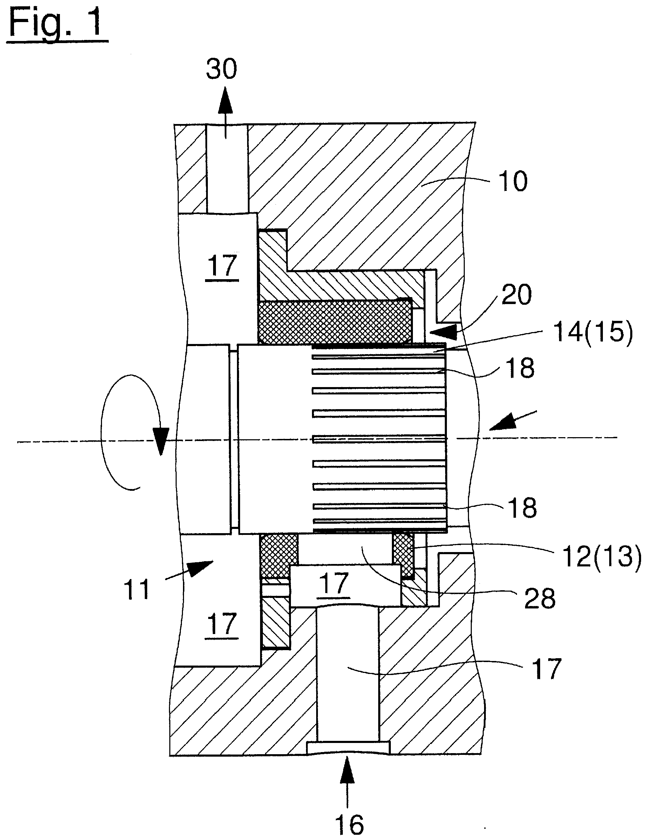

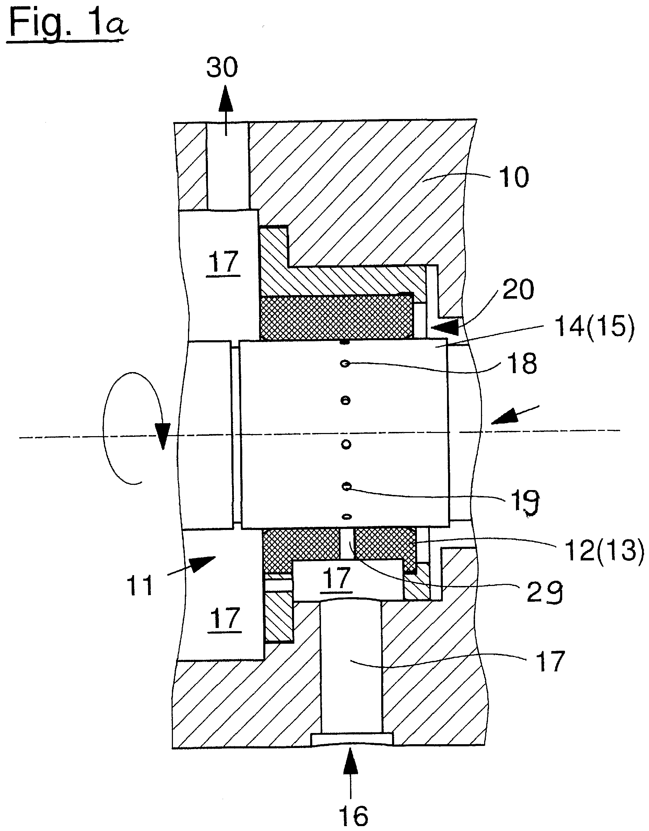

In Fig. 1 ist eine Art Versuchsanordnung in Form eines Maschinensystems 10 dargestellt, im welchem ein Gleitlager 11 mit einem feststehenden Element 12 in Form einer Lagerschale und einem rotierenden Element 14 in Form einer Lagerhülse angeordnet ist. Das Gleitlager 11 ist von einem Fluid 17 umgeben, welches auch als Lagerschmierung dient. Die Anordnung kann als Teil einer Pumpe verstanden werden, wobei das Fluid 17 das geförderte Medium darstellt, welches im Wesentlichen gemäß Pfeil 20 in das Lager eindringt und gemäß Pfeil 30 das Maschinensystem 10 verlässt. Das rotierende Element 14 in Form einer Lagerhülse trägt beispielsweise dreizehn Nuten 18, während das feststehende Element 12 in Form einer Lagerschale eine einzige Nut 28 aufweist. Dreht sich nun die Lagerhülse gegenüber der Lagerschale, dann wird ein Impuls erzeugt. Ein Schwingungsmesser-Analysator 16 ist im Kontakt mit oder im Fluid 17 angeordnet und kann die dort herrschenden Schwingungen erfindungsgemäß aufnehmen und verarbeiten.

Analog hierzu kann in einem anderen Ausführungsbeispiel das rotierende Element 14 in Form einer Lagerhülse beispielsweise dreizehn Bohrungen 19 tragen, während das feststehende Element 12 in Form einer Lagerschale eine einzige Bohrung 29 aufweist (Fig. 1a).

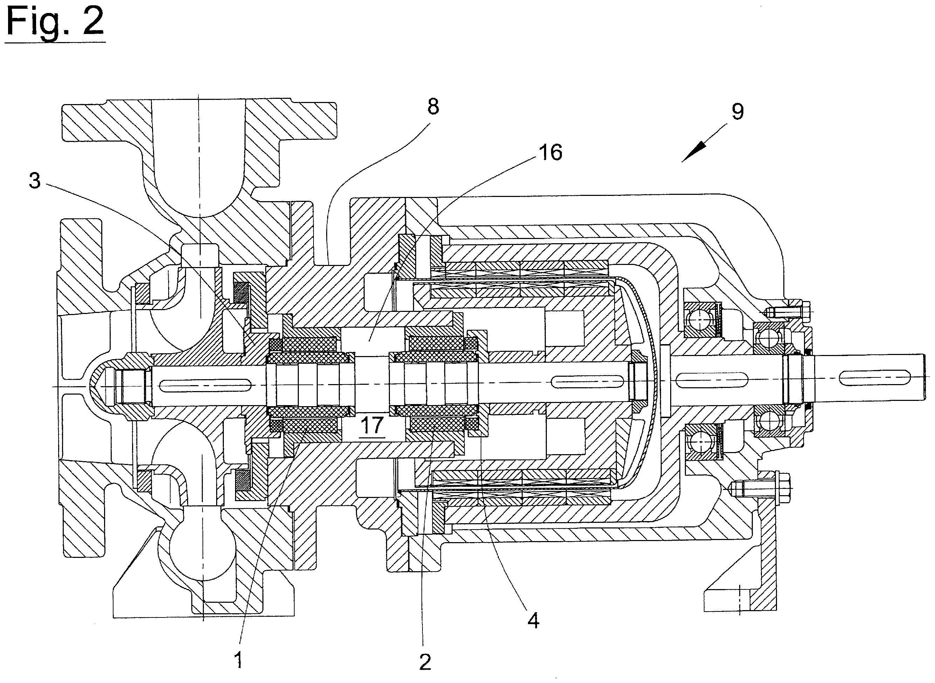

In Fig. 2 ist beispielhaft eine Anordnung von zwei Radialgleitlagern 1 und 2 und zwei Axialgleitlagern 3 und 4 in einer Pumpe 9 gezeigt. Die Lager 1 und 2 können in Art des Gleitlagers 11 aus Fig. 1 ausgeführt sein. Ein Schwingungsmesser-Analysator 16 ist im Bereich des Fluids 17 zwischen dem Gleitlagern 1 und 2 angeordnet. An der mit dem Bezugszeichen 8 markierten Stelle der Pumpenaußenwand ist ein Messpunkt für den Körperschall vorgesehen.

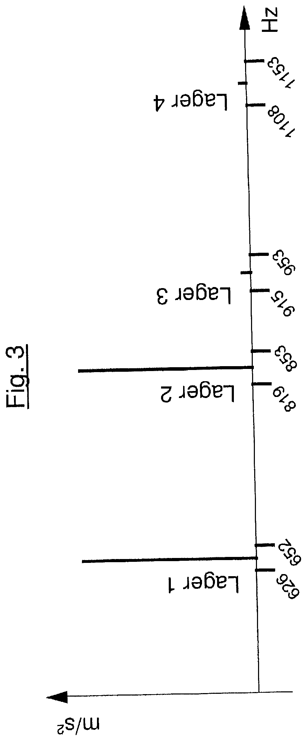

In den Fig. 3 bis 5 ist jeweils ein Frequenzspektrum mit verschiedenen Zuständen einer beispielhaften Pumpe gemäß Fig. 2 gezeigt. Eine praktische Anwendung der Erfindung wird hierzu beispielhaft beschrieben.

In mit einer Magnetkupplung zur Kraftübertragung ausgestatteten Pumpen müssen durch ein Fördermedium geschmierte Gleitlager eingesetzt werden, welche die rotierende Welle zentrieren und radiale sowie axiale Kräfte aufnehmen. Dafür sind im Allgemeinen vier einzelne Lagerstellen erforderlich, wie hier gezeigt zwei Axiallager und zwei Radiallager. Die Nenndrehzahl liegt bei dieser beispielhaften Maschine bei 2950 Umdrehungen pro Minute und wird durch einen 3-Phasen-Asynchron-Elektromotor erzeugt. Der lastabhängige Schlupf dieses Motors ist +/- 2%.

Die Messung kann nun als Körperschall- oder Flüssigkeitsschall- sowie jede Art von Schwingbeschleunigungsmessung ausgeführt sein. Der Sensor des Schwingungsmesser-Analysators ist vorzugsweise zwischen den Lagern angeordnet, um annähernd gleiche Signalstärken von allen Lagern zu erhalten.

In diesem Beispiel sind den Lagern 1 bis 4 durch oben beschriebene Maßnahmen individuelle Frequenzen zugeordnet worden:
Radiallagerpaarung pumpenseitig: 13 Impulse pro Umdrehung (Lager 1)
Radiallagerpaarung antriebsseitig: 17 Impulse pro Umdrehung (Lager 2)
Axiallagerpaarung pumpenseitig: 19 Impulse pro Umdrehung (Lager 3)
Axiallagerpaarung antriebsseitig: 23 Impulse pro Umdrehung (Lager 4)

Daraus ergeben sich folgende Überlauffrequenzen und ein lastabhängiger Streubereich von:
Drehzahlstreubereich = 3009 bis 2891 Umdrehungen pro Minute
Lager 1 = 651,95 Hz bis 626,34 Hz
Lager 2 = 852,55 Hz bis 819,06 Hz
Lager 3 = 952,85 Hz bis 915,42 Hz
Lager 4 = 1153,45 Hz bis 1108,14 Hz

Die Radiallagerpaarungen liefern bei Rotation und störungsfreiem Betrieb ihr zugewiesenes Signal. Bauartbedingt haben die Axiallager in dieser Pumpe im Normalbetrieb keinen Kontakt. Grund hierfür ist ein hydraulisches Ausgleichssystem, das die Welle in eine Mittelstellung zwingt. Dies führt dazu, dass die Signale von Lager 3 und 4 durch den erhöhten Abstand voneinander kein oder nur ein sehr schwaches Signal erzeugen.

Fig. 3 zeigt den Normal- bzw. Gutzustand im Frequenzspektrum für diese Pumpe.

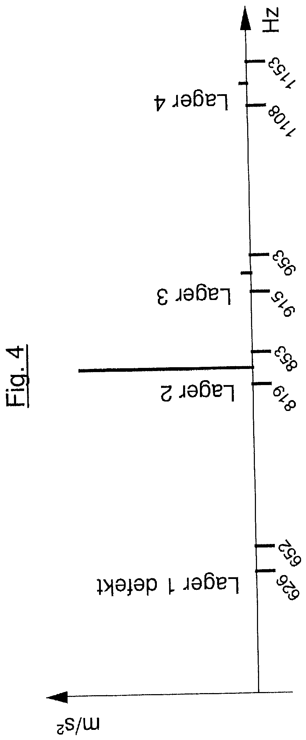

Fällt Lager 1 durch Bruch aus, verändert sich das Spektrum in der Frequenzanalyse gemäß Fig. 4.

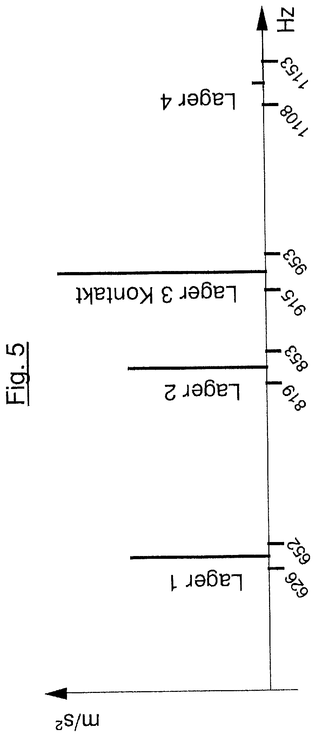

Wird der hydraulische Ausgleich gestört und das Lager 3 dadurch axial belastet, erhält man Signale nach Fig. 5.

Das Fehlen eines Schmierstoffes erzeugt eine Veränderung im Schwingspektrum. Trockenlauf kann somit ebenfalls erkannt werden. Denkbar ist auch die Erkennung von Kavitation innerhalb der Lager / Pumpe. Diese Möglichkeiten sind jedoch abhängig von den Eigenschaften des Schmierstoffes sowie der Messmethode und müssen für den Einzelfall betrachtet werden. Weitere Möglichkeiten der Schadens- bzw. Fehlfunktionserkennung sind selbsterklärend. In allen als Schadensfall erkannten Situationen kann die jeweilige Maschine kurzfristig stillgesetzt werden, um größeren Schaden zu vermeiden.

Im Folgenden werden geeignete Maßnahmen zur drehzahlabhängigen Impulserzeugung in rotierenden, flüssigkeitsgeschmierten Gleitlagern zur Überwachung mittels schwingungstechnischer bzw. akustischer Frequenzanalyse diskutiert.

Die hier verwendeten Begriffe "Impulsgeber" und "Impulsempfänger" beziehen sich auf gewollte Oberflächenveränderungen in Lagerschale und Lagerhülse, die mit unten beschriebenen Maßnahmen hergestellt werden können. Die Begriffe sind keine technisch üblichen Bezeichnungen, sie sollen vielmehr das Verständnis im Gesamtzusammenhang erleichtern.

Die Oberflächen der Kontaktbereiche der Gleitlagerpaarungen Lagerschale - Lagerhülse werden beidseitig strukturiert. Die eine Seite mit einer Vielzahl von "Impulsgebern", die andere Oberfläche mit nur einem "Impulsempfänger". Dabei spielt es eine untergeordnete Rolle, ob dies am rotierenden oder feststehenden Lager geschieht.

Impulsgeber und Impulsempfänger können durch Nuten, Bohrungen, Vertiefungen, Erhöhungen oder ähnlichen gewollt hergestellte Oberflächenveränderungen realisiert werden. Aufgrund der örtlich stabilen Signalübertragung auf den Schwingungsmesser-Analysator 16 (Fig. 1) ist in den meisten Fällen (wie auch hier) die stillstehende Lagerschale als Impulsempfänger ausgeführt. Die Herstellung von Impulsgebern oder -empfängern ist durch fräsen, bohren, schleifen, lasern, sintern, gießen, beschichten und allen anderen geeigneten Materialauftrags- bzw. Abtragstechniken möglich.

Die Begriffe "Impulsgeber" und "Impulsempfänger" sind keine genormten, technischallgemein gebräuchlichen Beschreibungen. Sie dienen in diesem Zusammenhang nur zur Vereinfachung der Beschreibung und stehen in keiner Verbindung mit komplexen auf dem Markt befindlichen Instrumenten, Sensoren bzw. Bauteilen. Da die Möglichkeiten zur Impulserzeugung für das Verfahren sehr umfangreich sind werden mangels eines alternativen, passenderen Sammelbegriffes für diese Vorrichtungen, die Begriffe "Impulsgeber" und "Impulsempfänger" als verständlich und klar eingeschätzt.

Die Impulsgeber, resp. Nuten 18 sind in ihrer Anzahl variabel und individuell für den Einsatzfall wählbar. Dadurch erzeugen sie bei Überlauf die definierte und zugeordnete Soll-Frequenz der jeweiligen Lagerpaarung.

Als Impulsempfänger (Auslöser des Impulses) wird eine einzelne Oberflächenstruktur in Form der Nut 28 auf der Kontaktfläche der feststehenden Lagerschale ein- bzw. aufgebracht.

Bei Rotation der Lagerhülse passieren nun die Nuten 18 des Impulsgebers 15 die Nut 28 des Impulsempfängers 13. Bei jedem Überlauf entsteht durch hierbei auftretende Scherkräfte sowie plötzliche Druckänderungen im Schmiermittel, dem Fluid 17 im Bereich der Oberflächenstruktur zwischen feststehendem und rotierendem Element ein messbarer Schwingungsimpuls, der mit üblichen Schwingungsmesser-Analysatoren aus Schwingungstechnik und Akustik detektierbar ist. Grundsätzlich sind alle Messgeräte, die die oben genannte Sensorik verarbeiten können, einsetzbar, wenn sie die Möglichkeit zur Frequenzanalyse (z.B. Fast Fourier Transformation) bieten. Ideal sind natürlich Messgeräte, die sich speziell für die Aufgabe konfigurieren lassen (z.B. Wahl des Algorithmus, Streubereich Drehzahl, Abschaltpunkte usw.). Hierzu eignen sich z. B. der Vibscanner VIB 5.400 von db Prüftechnik oder der Vibrotest 60 von Brüel & Kjaer Schneck.

Auf Basis der Einzelimpulse bei Überlauf ergibt sich bei Betrieb der Maschine über die Anzahl der Impulsgeber am Umfang des Lagers und die Drehzahl die messbare Erkennungsfrequenz (Soll-Schwingfrequenz) des betreffenden Gleitlagers. Idealerweise arbeitet man bei der Messwerterfassung mit nur einem Schwingungsmesser-Analysator, der je nach Anwendungsfall den Flüssigkeitsschall, den Körperschall oder die Schwingungsbeschleunigung mehrerer Gleitlager erfasst und verarbeitet.

Diese Impulse werden nun sensorisch (Schall, Schwingung, Beschleunigung) erfasst und selektiv in einem Frequenzspektrum dargestellt, das ergibt .z.B. 13 Löcher (Impulsgeber) x 2900 rpm / 60 sec.= 628.3 Hz am Impulsempfänger.

Natürlich kann durch Änderung der Form und Lage dieser Anordnung die Signalstärke (Impulsstärke) für den jeweiligen Anwendungsfall verändert bzw. optimiert werden. Möglichkeiten zur Signaloptimierung sind z. B. Anordnung von Resonanzräumen am Impulsgeber /-empfänger, die Durchströmung der Impulsgeber /-empfänger mittels Schmierstoff und eine Druckerhöhung des Schmierstoffs im Kontaktbereich usw.

Einige Gleitlagerhersteller strukturieren die Oberflächen ihrer Lager aus Gründen der verbesserten Tragfähigkeit oder einer optimierten Schmiermittelzufuhr. Dies ist im Sinne der Erfindung bei der Herstellung der Impulserzeuger oder Impulsempfänger nicht angestrebt. Sollten jedoch die Vorteile solcher Strukturen bei der Herstellung von Impulsgebern im Sinne der vorliegenden Erfindung integrierbar sein, besteht die Möglichkeit diese auch als sekundären Vorteil zu nutzen.

Durch die Änderung der Anzahl der Impulsgeber wird, abhängig von der Drehzahl, die Frequenz der Impulsmesswerte verändert und kann somit als eindeutiges, individuelles Schwingungssignal der Lagerpaarung (Soll-Schwingfrequenz) zugeordnet werden.

Als Soll-Schwingfrequenzen werden idealerweise solche Frequenzen ausgewählt, definiert und zugeordnet werden, die nicht mit in dem betroffenen Maschinensystem aufgrund seiner Konstruktion auftretenden Frequenzen verwechselt werden können. Der Vorteil liegt - wie oben schon betont - auf der Hand: Unwuchten, Fehlausrichtungen, Schaufelpassier- oder Überrollfrequenzen und deren Vielfache können vermieden und damit nahezu jegliche Fehlinterpretationen ausgeschlossen werden.

Hierbei eignen sich für die Erkennbarkeit und Abgrenzung zu anderen Frequenzsignalen auch Primzahlanordnungen für die Impulsgebung pro Umdrehung der Lagerhülse, d. h. des Impulsgebers 14 gut.

Ein Ausführungsbeispiel sei hier kurz skizziert:
Eine Lagerhülse mit dreizehn Impulsen pro Umdrehung erzeugt in einer Maschine, die mit 2900 Umdrehungen pro min. läuft, eine Lagerfrequenz von 628,3 Hz (2900/60 x 13). Bei 3500 Umdrehungen pro min. ergibt sich die Lagerfrequenz von 758,3 Hz usw. Um Drehzahlschwankungen auszugleichen kann ein Erfassungs- oder Reaktionsbereich der Messgeräte festgelegt werden, der natürlich dem lastabhängigen Drehzahlbereich der Maschine entspricht (üblicherweise +/- 2% von Nennwert). Wird mit drehzahlveränderlichen Antriebsmaschinen gearbeitet, kann eine Drehzahlrückmeldung (Frequenzumformer, Motorsensor) integriert werden. Es kann auch in der Maschine die Drehfrequenz als stärkstes Frequenzsignal nach der Methode "Impulserzeugung" festgelegt werden und damit als Kalkulationsgrundlage für die Messelektronik und Software dienen.

Mit dem erfindungsgemäßen Verfahren können annähernd alle flüssigkeitsgeschmierten Gleitlageranordnungen überwacht werden, wie sie zum Beispiel in Pumpen, Werkzeugmaschinen, Rührwerken, Kompressoren, Turbinen, Fördereinrichtungen und vielen anderen Kraft- und Arbeitsmaschinen vorkommen.
Es ist auch möglich, mit dem erfindungsgemäßen Verfahren die Bewertung des vom Schwingungsmesser-Analysator erfassten Signals umzukehren, d. h. wenn kein Soll-Schwingfrequenzsignal messbar oder die Intensität sehr gering ist, kann dieser Zustand auch als "gut" definiert und bewertet werden und im Falle eines Auftretens der zugewiesenen Frequenz, einen Schaden bzw. Fehlfunktion anzeigen. Beispiel hierfür sind axiale Begrenzungslager, die im Normalbetrieb keinen physischen Kontakt zu einer Begrenzung haben und im Fehlerfall, also vorhandenem Kontakt mit einer Begrenzung die Maschine vor größerer Beschädigung schützen.

Ein wesentlicher Vorteil der vorliegenden Erfindung besteht in der konstruktiv frei wählbaren Frequenz, realisiert durch die Anzahl der Impulsgeber, die das unbeschädigte Lager erzeugen soll. Damit lassen sich Frequenzen einstellen, die nicht natürlich in dieser Maschine/ Anordnung erregt werden. Es ist damit möglich, die erzeugten und zu bewertenden Frequenzen in einen Bereich des Frequenzspektrums zu legen, in dem normalerweise nur das Grundrauschen dominiert (z.B. üblicherweise im Pumpenbau F> 600 Hz). Dadurch wird die Unterscheidung jedes einzelnen von einer Vielzahl von Gleitlagern in einer komplexen Maschine oder Maschinenanordnung möglich.

Je nach Gestaltung der Impulsgeber und Impulsendfänger kann auch auf die Signalstärke regulierend Einfluss genommen werden. Außerdem sind für die reine Funktionsüberwachung von Gleitlagern keine Referenzmessungen nötig, da nur das einfache Vorhandensein des (messbaren) Signales auf der zugeordneten Frequenz ausreicht, um eine Beurteilung "in Ordnung" oder bei - Fehlen dieses Signales - "nicht in Ordnung" zu treffen.

Die große Besonderheit und Neuheit bei diesem Verfahren besteht darin, dass nicht nach Signalen eines beschädigten Lagers oder einer sich anbahnenden Beschädigung (Verschleißparameter) gesucht wird, sondern es wird der Gutzustand kontrolliert und lückenlos überwacht.

Durch die freie Wahl der Kontrollfrequenzen werden Verwechselungen und Überlagerung in der Maschine vermieden und selbst bei Messungen von einer Vielzahl von Gleitlagern in der Maschine eine eindeutige Zuordnung einzelner Lager mit nur einem Sensor erreicht.

Im Unterschied zu den anderen Verfahren erkennt das erfindungsgemäße Verfahren ein komplett fehlendes Lager (kein Signal). Auch können keramische Lager sicher auf plötzlichen Bruch überwacht werden. Die Signalstärke ist (herstellungstechnisch) beeinflussbar und kann damit für die Messung und Auswertung optimiert werden. Das erfindungsgemäße Verfahren benötigt bei den zu erkennenden Betriebszuständen und empirisch ermittelten Werte keine Referenzmessungen.

Das Verfahren ist problemlos reproduzierbar und auf alle Lagergrößen, Drehzahlen und Umgebungsbedingungen anzuwenden. Die Beeinflussung durch die Umgebungsbedingungen (Werkstoffe, Schmiermittel, Temperatur...) ist im Vergleich zu anderen Methoden als vernachlässigbar einzuschätzen

### Bezugszeichen

- 1: Radialgleitlager
- 2: Radialgleitlager
- 3: Axialgleitlager
- 4: Axialgleitlager
- 6: Schwingungsmesser-Analysator
- 7: Fluid
- 8: Messpunkt Körperschall
- 9: Pumpe
- 10: Maschinensystem
- 11: Gleitlager
- 12: feststehendes Element
- 13: Impulsempfänger
- 14: rotierendes Element
- 15: Impulsgeber
- 16: Schwingungsmesser-Analysator
- 17: Fluid
- 18: Nut
- 19: Bohrung
- 28: Nut
- 20: Pfeil
- 29: Bohrung
- 30: Pfeil

## Patentansprüche

1. Verfahren zur Überwachung wenigstens eines ersten Gleitlagers im Betrieb, mit folgenden Schritten:
a1) Definieren und Zuordnen einer ersten Soll-Schwingfrequenz für das zu überwachende Lager, welche von dem ersten zu überwachenden Lager im laufenden Betrieb mechanisch oder hydraulisch erzwungen und drehzahlabhängig erzeugt wird,
b1) Aufnehmen einer ersten Ist-Schwingfrequenz im laufenden Betrieb des ersten Gleitlagers mit einer Messvorrichtung,
c1) Vergleichen der ersten Ist-Schwingfrequenz mit der ersten Soll-Schwingfrequenz.

2. Verfahren nach Anspruch 1, zur Überwachung wenigstens eines zweiten Gleitlagers im Betrieb, **gekennzeichnet durch** folgende Schritte,
a2) Definieren und Zuordnen einer zweiten von der ersten verschiedenen Soll-Schwingfrequenz für wenigstens das zweite zu überwachende Gleitlager, welche von dem zweiten zu überwachenden Lager im laufenden Betrieb mechanisch oder hydraulisch erzwungen und drehzahlabhängig erzeugt wird,
b2) Aufnehmen einer zweiten Ist-Schwingfrequenz im laufenden Betrieb des zweiten Gleitlagers mit einer Messvorrichtung,
c2) Vergleichen der zweiten Ist-Schwingfrequenz mit der zweiten Soll-Schwingfrequenz.

3. Verfahren nach Anspruch 1 oder 2, **dadurch gekennzeichnet, dass** als Soll-Schwingfrequenzen solche Frequenzen ausgewählt, definiert und zugeordnet werden, die nicht mit in dem betroffenen Maschinensystem außerhalb der Gleitlager aufgrund seiner Konstruktion auftretenden Frequenzen verwechselt werden können.

4. Vorrichtung zur Überwachung wenigstens eines in einem Maschinensystem (10) angeordneten Gleitlagers (11) mit einem feststehenden Element (12) und einem rotierenden Element (14), insbesondere nach einem Verfahren gemäß einem der vorhergehenden Ansprüche, **gekennzeichnet durch** folgende Merkmale:
a) das rotierende Element (14) weist einen Impulsgeber (15) auf,
b) das am Maschinensystem (10) befestigt angeordnete feststehende Element (12) weist einen Impulsempfänger (13) auf,
c) im Bereich des Maschinensystems (10) ist ein Schwingungsmesser-Analysator (16) angeordnet.

5. Vorrichtung zur Überwachung wenigstens eines in einem Maschinensystem angeordneten Gleitlagers mit einem feststehenden Element und einem rotierenden Element, insbesondere nach einem Verfahren gemäß einem der vorhergehenden Ansprüche, **gekennzeichnet durch** folgende Merkmale:
a) das rotierende Element weist einen Impulsempfänger auf,
b) das am Maschinensystem befestigt angeordnete feststehende Element weist einen Impulsgeber auf,
c) im Bereich des Maschinensystems ist ein Schwingungsmesser-Analysator angeordnet.

6. Vorrichtung nach Anspruch 4 oder 5, **dadurch gekennzeichnet, dass** die Impulsgeber und/oder Impulsempfänger als Nuten (18), Bohrungen, Vertiefungen, Erhöhungen oder ähnliche Oberflächenveränderungen ausgebildet sind, wobei sich die Anzahl der Impulsgeber und Impulsempfänger unterscheidet, einer der beiden jedoch nur einmal auftritt.

7. Vorrichtung nach Anspruch 6, Variante nach Anspruch 4, **dadurch gekennzeichnet, dass** das rotierende Element als Impulsgeber (15) mit dreizehn Nuten (18) und das feststehende Element als Impulsempfänger (13) mit einer (Zahlwort 'eins') Nut (28) ausgebildet ist.
